# FASCICULE DE BREVET EUROPEEN

(11) **EP 3 378 790 B1**
(45) Date de publication et mention de la délivrance du brevet: **17.06.2020**
(21) Numéro de dépôt: 18160524.7
(22) Date de dépôt: 07.03.2018
(51) Int. Cl.: B64D 29/00, B64D 45/00, B64F 5/60, B64F 5/40

(54) **CAPOT DE TURBOMACHINE AVEC ÉCRAN**
ABDECKUNG EINER STRÖMUNGSMASCHINE MIT BILDSCHIRM
TURBOMACHINE COWLING WITH SCREEN

(30) Priorité: 22.03.2017 BE 201705188
(43) Date de publication de la demande: 26.09.2018
(73) Titulaire: Safran Aero Boosters SA, 4041 Herstal (BE)
(72) Inventeur: RAIMARCKERS, Nicolas, 4263 Tourinne (Braives) (BE)
(74) Mandataire: Lecomte & Partners

(56) Documents cités:
- EP-A1- 2 378 490
- US-A1- 2002 110 263
- US-A1- 2005 017 876

## Description

### Domaine technique

L'invention concerne le contrôle visuel d'une turbomachine. Plus précisément, l'invention concerne une turbomachine équipée de capot, notamment un turboréacteur d'avion ou un turbopropulseur d'aéronef.

### Technique antérieure

La surveillance et le contrôle d'un turboréacteur permettent de s'assurer de son bon fonctionnement, et de déceler des pannes. Cette surveillance permet également d'anticiper sur des probabilités de risques de pannes par le biais de la surveillance de certains paramètres endogènes du turboréacteur. Par exemple en vol, le traitement de données permet d'analyser et d'identifier des anomalies pouvant représenter un danger présent ou ultérieur.

Le document FR 2 971 595 A1 divulgue un procédé de surveillance d'un turboréacteur. Le procédé comporte les étapes suivantes : recueillir au cours du temps des mesures sur des variables relatives à un moteur courant comprenant un premier ensemble de mesures sur des variables endogènes et un second ensemble de mesures sur des variables exogènes ; standardiser les mesures relatives aux variables endogènes en prenant en compte les mesures relatives aux variables exogènes pour former à chaque acquisition un point d'entrée représentant un état dudit moteur courant dans un espace multidimensionnel ; projeter chaque point d'entrée de l'espace multidimensionnel sur un point image d'une carte, construite préalablement, pour former une suite de points images sur ladite carte reflétant la distribution des points d'entrées dans l'espace multidimensionnel, lesdits points images formant une trajectoire (S1-S3) courante représentative d'une évolution des états dudit moteur courant ; comparer un morceau de la fin de ladite trajectoire courante avec des morceaux de trajectoires de moteurs d'aéronefs enregistrées précédemment dans une base de données pour chercher des trajectoires similaires ; et analyser l'évolution statistique de ladite fin de trajectoire courante en fonction desdites trajectoires similaires pour anticiper des opérations de maintenance sur ledit moteur courant. Toutefois la précision de ce procédé reste limitée, tout comme la sécurité qu'il procure.

Le document US2005/017876 A1 divulgue un turboréacteur comprenant un capot extérieur, un organe, et un système de surveillance apte à fournir une information sur l'organe. Le système permet une transmission via un réseau sans fil et la visualisation de l'information sur des écrans externes.

Le document EP 2 378 490 A1 divulgue une transmission et une visualisation d'informations externes à l'avion.

Le document US2002/110263 A1 divulgue la transmission et la visualisation d'information sur différents écrans externes à l'avion.

### Résumé de l'invention

### Problème technique

L'invention a pour objectif de résoudre au moins un des problèmes posés par l'art antérieur. Plus précisément, l'invention a pour objectif d'améliorer la sécurité de la surveillance d'un turboréacteur. L'invention a également pour objectif de proposer une solution rapide, résistante, légère, économique, fiable, facile à produire, améliorant le rendement, et limitant les flux d'informations.

### Solution technique

L'invention a pour objet un turboréacteur selon la revendication 1.

Selon des modes avantageux de l'invention, le turboréacteur peut comprendre une ou plusieurs des caractéristiques suivantes, prises isolément ou selon toutes les combinaisons techniques possibles :

Le capot extérieur comprend une paroi avec un dégagement dans lequel est disposé l'écran.

Le capot est un capot mobile de manière à articuler l'écran par rapport à l'organe.

Le turboréacteur comprend une nacelle, le capot étant un capot de nacelle.

Le capteur est un capteur de niveau, ou un capteur de température, ou un capteur de pression ; dont la mesure est affichée sur l'écran de visualisation.

Le turboréacteur comprend une alimentation électrique et/ou une mémoire informatique.

L'organe comprend un émetteur radio configuré pour communiquer avec l'écran de visualisation afin de communiquer l'information sur l'organe.

L'organe est un réservoir d'huile avec une surface externe intégralement opaque.

L'écran de visualisation comprend des moyens de traitement de données de l'information sur l'organe.

Le turboréacteur, notamment l'écran de visualisation, comprend une interface utilisateur afin de sélectionner l'information de l'organe à visualiser.

L'information sur l'organe est un état dudit organe.

L'écran de visualisation est visible depuis l'extérieur du turboréacteur.

L'écran de visualisation comprend une surface de visualisation qui est généralement perpendiculaire à l'axe de rotation du turboréacteur et/ou qui est généralement verticale.

Le capot comprend une surface extérieure qui affleure la surface extérieure de l'écran.

L'organe est un élément consommable et/ou remplaçable du turboréacteur.

L'organe comprend une puce RFID apte à communiquer avec l'écran.

L'écran de visualisation comprend une alimentation électrique et/ou une mémoire informatique dédiée(s).

L'écran de visualisation est disposé en moitié inférieure du turboréacteur.

Le turboréacteur comprend plusieurs organes, chacun avec plusieurs capteurs éventuellement rattachés au système de surveillance, optionnellement l'écran de visualisation est configuré pour visualiser les informations de chacun desdits organes.

L'écran affiche les informations desdits organes directement ou via le système de surveillance.

Le système de surveillance n'est pas un aspect indispensable de l'invention. L'invention concerne également un turboréacteur comprenant un capot extérieur, un organe avec une information telle un état ou une donnée de l'organe; remarquable en ce que le capot extérieur comprend un écran de visualisation en liaison avec l'organe de manière à afficher son information.

L'invention a également pour objet un procédé de contrôle d'un organe d'un turboréacteur d'aéronef selon la revendication 9.

Selon des modes avantageux de l'invention, le procédé peut comprendre une ou plusieurs des caractéristiques suivantes, prises isolément ou selon toutes les combinaisons techniques possibles :

Lors de l'étape (a) de fonctionnement l'aéronef est en vol, et/ou lors de l'étape (c) de visualisation le turboréacteur est à l'arrêt.

L'aéronef comprend au moins une alimentation en énergie du turboréacteur qui est coupée lors de l'étape (c) visualisation.

L'aéronef comprend un cockpit et un régulateur numérique à calculateur qui forme une liaison informatique entre le turboréacteur et le cockpit.

L'aéronef comprend un système d'aide à la maintenance dans lequel est intégré le système de surveillance de l'organe.

L'aéronef comprend plusieurs turboréacteurs selon l'invention, chaque turboréacteur communiquant avec le système d'aide à la maintenance et/ou avec le régulateur numérique lors de l'étape (a) de fonctionnement ; ladite communication étant coupée pendant l'étape de (c) visualisation.

A l'étape (c) de visualisation, l'écran de visualisation est configuré pour afficher au moins un des paramètres compris dans le groupe suivant : la durée depuis la dernière maintenance de l'organe, la durée depuis le dernier remplacement dudit organe, la durée jusqu'à la prochaine maintenance de l'organe.

Le procédé comprend une étape (b) d'attente entre l'étape (a) de fonctionnement et l'étape (c) de visualisation, ladite étape (b) d'attente durant au moins : 1min, ou 5min, ou 30min.

L'aéronef comprend plusieurs turboréacteurs selon l'invention.

L'invention a également pour objet un programme d'ordinateur selon la revendication 14.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles.

### Avantages apportés

L'invention permet de simplifier la maintenance, et notamment l'acquisition des données nécessaire à cette fonction. Cette démarche reste simple même lorsque le turboréacteur est à l'arrêt, et/ou que son FADEC est sollicité par ailleurs, notamment lorsqu'il effectue une communication de ses données de vol avec un autre système informatique. En particulier, l'acquisition de données pendant un contrôle au sol devient autonome du FADEC. Cela limite les fonctions que ce dernier doit remplir et préserve son niveau de sécurité.

Un bénéfice de l'invention est qu'il devient possible de se renseigner sur un organe même lorsque celui-ci est démonté du turboréacteur. En effet, la mémoire de l'écran de visualisation dispose des données pertinentes malgré l'absence de l'organe en question. Ceci simplifie les flux d'informations et leur fiabilité pendant un entretien au sol. Les risques liés au fait que plusieurs équipes de maintenance agissent en simultané diminuent.

L'invention permet d'effectuer un tri parmi les capteurs couramment utilisés, par exemple sur un réservoir, et de ne garder que ceux qui sont véritablement indispensable en plus d'être sûr. Ainsi, la fenêtre transparente de contrôle équipant couramment un réservoir devient optionnelle. En effet, le capteur électronique de son niveau permet de garantir une information fiable sans le fragiliser.

### Brève description des dessins

La figure 1 représente une coupe de turboréacteur selon l'invention.
La figure 2 est une vue de face du turboréacteur de la figure 1.
La figure 3 illustre un diagramme du procédé de contrôle d'un organe d'un turboréacteur d'aéronef selon l'invention.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

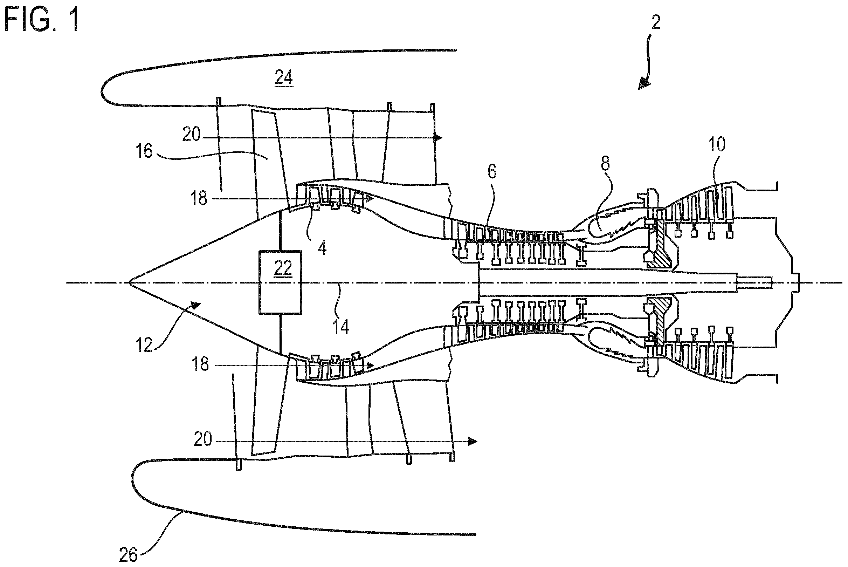

La figure 1 représente de manière simplifiée une turbomachine axiale en coupe selon son axe de rotation. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux susmentionnés de la turbomachine, et en un flux secondaire 20 traversant un conduit annulaire (partiellement représenté) le long de la machine pour ensuite rejoindre le flux primaire en sortie de turbine. La soufflante 16 peut être du type non carénée, par exemple à double rotors contrarotatifs, éventuellement en aval.

Des moyens de démultiplication 22, tel un réducteur épicycloïdal, peuvent réduire la vitesse de rotation de la soufflante et/ou du compresseur basse-pression 4 par rapport à la turbine associée. Le flux secondaire 20 peut être accéléré de sorte à générer une réaction de poussée. Les flux primaire 18 et secondaire 20 sont des flux annulaires coaxiaux et emmanchés l'un dans l'autre. Ils sont canalisés par le carter de la turbomachine et/ou des viroles. A cet effet, le carter présente des parois cylindriques qui peuvent être internes et externes.

En outre, le turboréacteur 2 peut présenter une nacelle 24 entourant la soufflante 16. La nacelle 24 peut entourer l'ensemble du moteur. Elle peut entourer les compresseurs (4 ; 6), éventuellement la turbine 10 et la chambre de combustion. Elle forme l'enveloppe extérieure. Elle forme un carénage, et est profilée aérodynamiquement. Elle peut être délimitée par un capot extérieur 26. Le capot extérieur 26 peut former sa surface extérieure, et cacher l'intérieur du turboréacteur 2. Il peut former partiellement le carter.

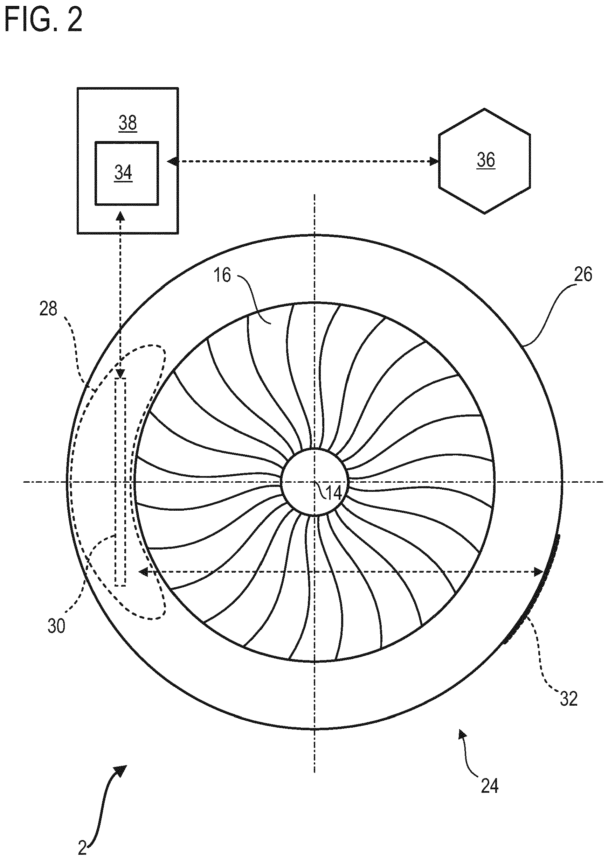

La figure 2 est une vue de face du turboréacteur 2 depuis l'amont. La soufflante 16 et l'axe de rotation 14 sont apparents. La nacelle 24 est vue de devant.

Le turboréacteur 2 comprend différents organes, également appelés équipements. A titre d'exemple, il peut comprendre un réservoir d'huile 28, des actionneurs, des pompes, un démarreur, un échangeur de chaleur. Le réservoir pourrait être un réservoir de carburant auxiliaire.

Le niveau du réservoir 28 peut être estimé grâce à un capteur, telle une sonde 30. Celle-ci peut baigner dans l'huile contenue dans le réservoir 28 et renseigner sur le niveau via une grandeur électrique telle une résistance électrique et/ou une tension. La sonde 30 peut également mesurer l'évolution de la composition de l'huile, et/ou mesurer la présence de débris métalliques ; notamment ferromagnétiques.

Le turboréacteur 2 comprend avantageusement un écran de visualisation 32. L'écran de visualisation 32 peut par exemple être monté sur le capot 26. Il peut être logé dans une fenêtre ménagée dans la paroi du capot 26. Ainsi, elle est supportée par le capot 26 tout en étant visible depuis l'extérieur, c'est-à-dire depuis l'environnement du turboréacteur 2. L'écran de visualisation 32 peut être mobile. Il peut le devenir par l'intermédiaire du capot 26 lorsque ce dernier est pivotant. L'écran de visualisation 32 peut être un écran à cristaux liquides, couramment appelé écran LCD. Cet acronyme correspond à l'expression anglo-saxonne « Liquid Cristal Display ». Alternativement, l'écran de visualisation 32 peut être un écran à diodes électroluminescentes type écran LED ou écran OLED pour prendre une forme courbe. Tout autre type d'écran pouvant afficher un contenu variable est envisageable.

L'écran de visualisation 32 est configuré pour fournir l'état d'au moins un, ou de plusieurs organes du turboréacteur 2 en même temps. Par exemple, il parvient à indiquer le niveau de remplissage du réservoir 28, notamment grâce à la sonde 30. Dès lors, il devient possible de connaître le niveau de liquide sans ouvrir le turboréacteur 2. En outre, ce même niveau peut être connu d'un technicien sans que le réservoir ne présente de fenêtre transparente par laquelle le niveau peut être observé, et sans que le moteur ne fonctionne puisque l'écran de visualisation 32 peut inclure une alimentation électrique indépendante, et éventuellement une mémoire de stockage informatique associée à un processeur informatique.

Puisque l'écran de visualisation 32 peut être commun à plusieurs organes du turboréacteur, une interface utilisateur peut être prévue pour qu'un utilisateur y entre des données, tels des choix. Par exemple, il peut sélectionner les données qui l'intéressent. Entre autres, il peut choisir de consulter des historiques de températures, de pressions, de vibrations, des efforts mécaniques enregistrés en continu. Un programme d'ordinateur avec des instructions de code accompagne l'utilisateur et permet à l'écran de visualisation 32 de remplir ses différentes fonctions.

Le turboréacteur 2 peut également comprendre un système de surveillance 34. La communication entre l'écran de visualisation 32 et l'organe peut être directe, ou s'effectuer via le système de surveillance 34. L'organe, et éventuellement son ou ses capteurs, peut/peuvent comprendre un émetteur radio avec une mémoire. Par exemple, il peut s'agir d'une puce RFID dont l'acronyme correspond à l'expression anglo-saxonne « Radio-Frequency Identification ». Un tel élément parvient à communiquer par ondes avec un récepteur solidaire de l'écran de visualisation 32 et/ou du système de surveillance 34. Bien entendu, l'émetteur radio peut être remplacé par un câble électrique afin de permettre une communication. Le fait que le capteur appartienne à l'organe reste une vue de l'esprit puisque dans le fonctionnement du système de surveillance 34, the capteur peut être rattaché à l'ensemble système de surveillance 34. De même, l'émetteur radio, et donc tout moyen de transmission peuvent être rattachés au système de surveillance 34.

L'aéronef recevant le turboréacteur 2 peut comprendre plusieurs turboréacteurs 2, par exemple suspendus sous ses ailes. Par ailleurs, il peut comprendre un régulateur numérique à calculateur 36, couramment désigné par l'acronyme FADEC qui correspond à l'expression anglo-saxonne « Full Authority Digital Engine Control ». Ce dernier remplit la fonction de surveiller le fonctionnement mécanique et électronique du turboréacteur 2.

L'aéronef peut également être équipé d'un système d'aide à la maintenance 38. Celui-là peut recevoir le système de surveillance 34 de l'organe ; et/ou présenter des parties communes. Le système d'aide à la maintenance 38 est couramment désigné par l'acronyme ACMS qui correspond à l'expression anglo-saxonne « Aircraft Condition Moniroting System ».

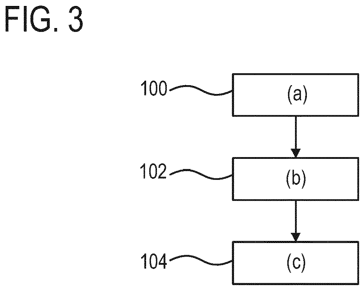

La figure 3 est un diagramme du procédé de contrôle d'un organe d'un turboréacteur d'aéronef. Le turboréacteur peut correspondre à celui décrit au travers des figures 1 et 2.

Le procédé peut comprendre les étapes suivantes, réalisées dans l'ordre qui suit :
(a) fonctionnement 100 du turboréacteur ; puis
(b) attente 102; et
(c) visualisation 104 au sol de l'écran de visualisation par un technicien au sol afin de contrôler l'état de l'organe ou de chaque organe présenté sur l'écran.

A l'étape (a) fonctionnement 100 l'aéronef est en vol, c'est-à-dire en altitude. Il peut également se déplacer au sol. Le turboréacteur chauffe. L'aéronef comprend un cockpit communiquant avec le régulateur numérique à calculateur, ce qui permet aux pilotes de suivre l'état de l'aéronef ; notamment indépendamment de l'écran de visualisation.

L'aéronef associé peut comprendre plusieurs turboréacteurs tels que décrits ci-dessus. Chaque turboréacteur communiquant avec le système d'aide à la maintenance et/ou avec le régulateur numérique lors de l'étape (a) fonctionnement 100. Toutefois, cette communication peut être coupée pendant l'étape (c) visualisation 104 tout en autorisant une visualisation d'état des organes avec l'écran car celui-ci est autonome et peut interagir avec chacun d'eux.

L'étape (b) attente 102 peut former un délai de séparation entre la fin de l'étape (a) fonctionnement 100 et le début de l'étape (c) visualisation 104. Lors de l'étape (b) attente 102, le turboréacteur est dans un état de repos, qui peut se poursuivre pendant l'étape (c) visualisation 104. Lors de l'étape (b) attente 102, le turboréacteur refroidit. Il peut se dilater grâce à la température ambiante. Il peut changer de forme et de configuration.

L'étape (b) attente 102 est un moment où le turboréacteur se stabilise. L'huile contenue dans le turboréacteur peut s'écouler par gravitation, et regagner une partie basse du turboréacteur. Elle est moins dispersée, et peut revenir dans le réservoir. Ainsi, l'information fournie au sol par les sondes et/ou capteurs du réservoir est plus fiable, notamment au sujet de la quantité d'huile globale.

L'étape (b) attente 102 peut séparer les étapes (a) fonctionnement 100 et (c) visualisation 104 d'au moins : 1 min, ou 15 min, ou 1h30min.

Pendant l'étape (c) visualisation 104 le turboréacteur est à l'arrêt, la rotation de son rotor est notamment stoppée. Il ne crée plus de poussée. L'énergie que fournit l'aéronef au turboréacteur, par exemple de l'électricité et/ou du carburant, est interrompue. Le turboréacteur devient autonome en énergie, notamment vis-à-vis de l'aéronef. Dès lors, le fonctionnement de l'écran de visualisation peut reposer sur sa propre alimentation, par exemple un accumulateur.

A l'étape (c) visualisation, l'écran de visualisation est configuré pour afficher au moins un des paramètres compris dans le groupe suivant : la durée depuis la dernière maintenance de l'organe, la durée depuis le dernier remplacement dudit organe, la durée jusqu'à la prochaine maintenance de l'organe. Un technicien peut alors comparer ces durées et vérifier si elles restent cohérentes avec les états et les historiques des organes considérés.

## Revendications

1. Turboréacteur (2) comprenant un capot extérieur (26), un organe, un système de surveillance (34) de l'organe apte à fournir une information sur l'organe;
**caractérisé en ce que**
le capot extérieur (26) comprend un écran de visualisation (32) :
apte à communiquer avec le système de surveillance (34) de manière à afficher l'information dudit organe, le système de surveillance (34) comprenant un capteur apte à mesurer l'information dudit organe et des moyens de communication pour transmettre l'information dudit organe à l'écran de visualisation ; ou
apte à communiquer directement avec l'organe de manière à afficher l'information dudit organe, l'organe comprenant un capteur apte à mesurer l'information dudit organe.

2. Turboréacteur (2) selon la revendication 1, **caractérisé en ce que** le capot extérieur (26) comprend une paroi avec un dégagement dans lequel est disposé l'écran (32).

3. Turboréacteur (2) selon l'une des revendications 1 à 2, **caractérisé en ce que** le capot (26) est un capot mobile de manière à articuler l'écran (32) par rapport à l'organe.

4. Turboréacteur (2) selon l'une des revendications 1 à 3, **caractérisé en ce qu'**il comprend une nacelle (24), le capot (26) étant un capot de nacelle (24).

5. Turboréacteur (2) selon la revendication 1, **caractérisé en ce que** le capteur (30) est un capteur de niveau, ou un capteur de température, ou un capteur de pression ; dont la mesure est affichée sur l'écran de visualisation (32).

6. Turboréacteur (2) selon l'une des revendications 1 à 5, **caractérisé en ce qu'**il comprend une alimentation électrique et/ou une mémoire informatique.

7. Turboréacteur (2) selon l'une des revendications 1 à 6, **caractérisé en ce que** l'organe comprend un émetteur radio configuré pour communiquer avec l'écran de visualisation (32) afin de communiquer l'information sur l'organe.

8. Turboréacteur (2) selon l'une des revendications 1 à 7, **caractérisé en ce que** l'organe est un réservoir d'huile (28) avec une surface externe intégralement opaque.

9. Procédé de contrôle d'un organe d'un turboréacteur (2) d'aéronef, **caractérisé en ce que** le turboréacteur (2) est conforme à l'une des revendications 1 à 8, le procédé comprenant une étape (a) de fonctionnement (100) du turboréacteur (2), et une étape (c) de visualisation (104) au sol de l'écran de visualisation (32) afin de contrôler l'information sur l'organe.

10. Procédé selon la revendication 9, **caractérisé en ce que** l'aéronef comprend au moins une alimentation en énergie du turboréacteur (2) qui est coupée lors de l'étape (c) de visualisation (104).

11. Procédé selon l'une des revendications 9 à 10, **caractérisé en ce que** l'aéronef comprend un système d'aide à la maintenance (38) dans lequel est intégré le système de surveillance (34) de l'organe.

12. Procédé selon l'une des revendications 9 à 11, **caractérisé en ce que** l'aéronef comprend plusieurs turboréacteurs (2) selon l'une des revendications 1 à 8, chaque turboréacteur (2) communiquant avec un système d'aide à la maintenance (38) et/ou avec un régulateur numérique (36) lors de l'étape (a) de fonctionnement (100); ladite communication étant coupée pendant l'étape (c) de visualisation (104).

13. Procédé selon l'une des revendications 9 à 12, **caractérisé en ce qu'**à l'étape (c) de visualisation (104), l'écran de visualisation (32) est configuré pour afficher au moins un des paramètres compris dans le groupe suivant : la durée depuis la dernière maintenance de l'organe, la durée depuis le dernier remplacement dudit organe, la durée jusqu'à la prochaine maintenance de l'organe.

14. Programme d'ordinateur comportant des instructions de code pour la mise en œuvre du procédé de contrôle d'un organe d'un turboréacteur (2) d'aéronef selon l'une des revendications 9 à 13 lorsqu'il est exécuté par des moyens de traitement

## Patentansprüche

1. Turbostrahltriebwerk (2) mit einer äußeren Verkleidung (26), einer Komponente und einem Überwachungssystem (34) für die Komponente, das in der Lage ist, Daten über die Komponente zu liefern, **dadurch gekennzeichnet, dass**
die äußere Verkleidung (26) einen Anzeigeschirm (32) umfasst, der so ausgelegt ist, dass er mit dem Überwachungssystem (34) kommuniziert, um Daten der Komponente anzuzeigen, wobei das Überwachungssystem (34) einen Sensor enthält, der so ausgelegt ist, dass er Daten der Komponente misst sowie Kommunikations-Vorrichtungen zur Übertragung von Daten der Komponente auf den Anzeigeschirm enthält, oder
dazu ausgelegt ist, direkt mit der Komponente zu kommunizieren, um die Daten der Komponente anzuzeigen, wobei die Komponente einen Sensor aufweist, der dazu ausgelegt ist, die Daten der Komponente zu erfassen.

2. Turbinenstrahltriebwerk (2) nach Anspruch 1, **dadurch gekennzeichnet, dass** die äußere Verkleidung (26) eine Wand mit einer Aussparung aufweist, in der der Bildschirm (32) angebracht ist.

3. Turbinenstrahltriebwerk (2) nach einem der Ansprüche 1 bis 2, **dadurch gekennzeichnet, dass** die Verkleidung (26) eine bewegliche Verkleidung ist, so dass der Bildschirm (32) relativ zu der Komponente schwenkbar angebracht ist.

4. Turbinenstrahltriebwerk (2) nach einem der Ansprüche 1 bis 3, **dadurch gekennzeichnet, dass** es eine Gondel (24) umfasst, wobei die Verkleidung (26) eine Gondelverkleidung (24) ist.

5. Turbinenstrahltriebwerk (2) nach Anspruch 1, **dadurch gekennzeichnet, dass** der Sensor (30) ein Füllstandssensor, ein Temperatursensor oder ein Drucksensor ist, dessen Messung auf dem Anzeigeschirm (32) angezeigt wird.

6. Turbinenstrahltriebwerk (2) nach einem der Ansprüche 1 bis 5, **dadurch gekennzeichnet, dass** es eine Stromversorgung und/oder einen Computerspeicher umfasst.

7. Turbinenstrahltriebwerk (2) nach einem der Ansprüche 1 bis 6, **dadurch gekennzeichnet, dass** die Komponente einen Funksender aufweist, der so konfiguriert ist, dass er mit dem Anzeigeschirm (32) kommuniziert, um Daten über die Komponente zu übermitteln.

8. Turbinenstrahltriebwerk (2) nach einem der Ansprüche 1 bis 7, **dadurch gekennzeichnet, dass** die Komponente ein Ölbehälter (28) mit einer vollkommen undurchsichtigen Außenfläche ist.

9. Verfahren zur Überwachung einer Komponente eines Turboluftstrahltriebwerks (2) eines Flugzeugs, **dadurch gekennzeichnet, dass** das Turboluftstrahltriebwerk (2) einen der Ansprüche 1 bis 8 erfüllt, wobei das Verfahren einen Schritt (a) des Betriebs (100) des Turbostrahltriebwerks (2) und einen Schritt (c) des Anzeigens (104) des Bildschirms (32) am Boden umfasst, um Daten über die Komponente zu überwachen.

10. Verfahren nach Anspruch 9, **dadurch gekennzeichnet, dass** das Flugzeug mindestens eine Stromversorgung für das Turbinenstrahltriebwerk (2) aufweist, die im Schritt (c) des Anzeigens abgeschaltet wird (104).

11. Verfahren nach einem der Ansprüche 9 bis 10, **dadurch gekennzeichnet, dass** das Flugzeug ein Wartungshilfssystem (38) umfasst, in das das Überwachungssystem (34) der Komponente integriert ist.

12. Verfahren nach einem der Ansprüche 9 bis 11, **dadurch gekennzeichnet, dass** das Flugzeug eine Vielzahl von Turbinenstrahltriebwerken (2) nach einem der Ansprüche 1 bis 8 umfasst, wobei jedes Turbinenstrahltriebwerk (2) während des Schritts (a) des Betriebs (100) mit einem Wartungs-Unterstützungssystem (38) und/oder mit einem digitalen Steuergerät (36) kommuniziert, wobei die Kommunikation während des Schritts (c) des Anzeigens (104) unterbrochen wird.

13. Verfahren nach einem der Ansprüche 9 bis 12, **dadurch gekennzeichnet, dass** in Schritt (c) des Anzeigens (104) der Bildschirm (32) so konfiguriert wird, dass er mindestens einen der Parameter anzeigt, die in der folgenden Auflistung enthalten sind: Dauer seit der letzten Wartung der Komponente, Dauer seit dem letzten Austausch der Komponente, Dauer bis zur nächsten Wartung der Komponente.

14. Computerprogramm mit Code-Anweisungen zur Ausführung des Verfahrens zur Steuerung einer Komponente eines Flugzeug-Turbostrahltriebwerks (2) nach einem der Ansprüche 9 bis 13, wenn es durch Datenverarbeitungs-Vorrichtungen ausgeführt wird.

## Claims

1. A turbojet engine (2) comprising an outer cover (26), a member, a monitoring system (34) for the member capable of providing information on the member; **characterised in that**
the outer cover (26) comprises a display screen (32) capable of communicating with the monitoring system (34) so as to display information from said member, the monitoring system (34) comprising a sensor capable of measuring information from said member and communication means for transmitting information from said member to the display screen; or
capable of communicating directly with the member so as to display the information from said member, the member comprising a sensor capable of measuring the information from said member.

2. The turbojet engine (2) according to claim 1, **characterised in that** the outer cover (26) comprises a wall with a recess in which the screen (32) is arranged.

3. The turbojet engine (2) according to any one of claims 1 to 2, **characterised in that** the cover (26) is a movable cover so as to articulate the screen (32) relative to the member.

4. The turbojet engine (2) according to any one of claims 1 to 3, **characterised in that** it comprises a nacelle (24), the cover (26) being a cover for the nacelle (24).

5. The turbojet engine (2) according to claim 1, **characterised in that** the sensor (30) is a level sensor, or a temperature sensor, or a pressure sensor; the measurement of which is displayed on the display screen (32).

6. The turbojet engine (2) according to any one of claims 1 to 5, **characterised in that** it comprises an electrical supply and/or a computer memory.

7. The turbojet engine (2) according to any one of claims 1 to 6, **characterised in that** the member comprises a radio transmitter configured to communicate with the display screen (32) in order to communicate information about the member.

8. The turbojet engine (2) according to any one of claims 1 to 7, **characterised in that** the member is an oil reservoir (28) with a completely opaque outer surface.

9. A method of monitoring a member of an aircraft turbojet engine (2), **characterised in that** the turbojet engine (2) complies with any one of claims 1 to 8, the method comprising a step (a) of operating (100) the turbojet engine (2), and a step (c) of displaying (104) on the ground the display screen (32) in order to monitor information about the member.

10. The method according to claim 9, **characterised in that** the aircraft comprises at least one power supply for the turbojet engine (2) which is switched off in the step (c) of displaying (104).

11. The method according to any one of claims 9 to 10, **characterised in that** the aircraft comprises a maintenance support system (38) in which the monitoring system (34) of the member is integrated.

12. The method according to any one of claims 9 to 11, **characterised in that** the aircraft comprises a plurality of turbojet engines (2) according to any one of claims 1 to 8, each turbojet engine (2) communicating with a maintenance support system (38) and/or with a digital controller (36) during the step (a) of operating (100); said communication being switched off during the step (c) of displaying (104).

13. The method according to any one of claims 9 to 12, **characterised in that** in step (c) of displaying (104), the display screen (32) is configured to display at least one of the parameters included in the following group: the duration since the last maintenance of the member, the duration since the last replacement of said member, the duration until the next maintenance of the member.

14. A computer program comprising code instructions for carrying out the method of controlling a member of an aircraft turbojet engine (2) according to any one of claims 9 to 13 when executed by processing means.
